# FASCICULE DE BREVET EUROPEEN

(11) **EP 2 125 943 B1**
(45) Date de publication et mention de la délivrance du brevet: **05.01.2011**
(21) Numéro de dépôt: 07847882.3
(22) Date de dépôt: 06.12.2007
(51) Int. Cl.: C08L 5/00, C08L 9/00, B60C 1/00

(54) **BANDE DE ROULEMENT DONT LA COMPOSITION COMPORTE UNE POUDRE DE GOMME DE GUAR**
LAUFFLÄCHE MIT EINER EIN GUARGUMMIPULVER ENTHALTENDEN ZUSAMMENSETZUNG
TREAD HAVING A COMPOSITION CONTAINING A GUAR GUM POWDER

(30) Priorité: 27.12.2006 FR 0611508
(43) Date de publication de la demande: 02.12.2009
(73) Titulaire: Société de Technologie MICHELIN, 63000 Clermont-Ferrand (FR); Michelin Recherche et Technique S.A., 1763 Granges-Paccot (CH)
(72) Inventeur: HIDROT, Jean-Denis, F-63400 Chamalieres (FR)
(74) Mandataire: Cohen, Sylvia
(86) Numéro de dépôt international: PCT/EP2007/063395
(87) Numéro de publication internationale: WO 2008/080750

(56) Documents cités:
- EP-A- 0 281 252

## Description

L'invention est relative aux compositions caoutchouteuses pour bande de roulement de pneumatique et plus particulièrement aux compositions caoutchouteuses utilisables dans les bandes de roulement de pneumatiques dits « hiver» c'est-à-dire de pneumatiques particulièrement performant sur des sols mouillés ou recouvert de neige ou de glace fondante c'est-à-dire pour des températures comprises entre -10°C et 0°C, de préférence entre -5°C et 0°C.

Différentes solutions existent pour permettre d'obtenir une bonne adhérence des pneumatiques même sur des sols recouverts de neige ou de glace. Ainsi les pneumatiques cloutés répondent à ces critères et permettent de résister efficacement au glissement sur la glace, cependant leur très forte action abrasive sur le revêtement du sol lui-même conduit progressivement à leur interdiction.

Les manufacturiers ont donc recherché d'autres types de solutions consistant à modifier la composition caoutchouteuse elle-même des bandes de roulement des pneumatiques.

Certaines solutions consistent par exemple à incorporer dans le mélange caoutchouteux constitutif de la bande de roulement, des poudres hydrosolubles. De telles poudres se solubilisent au contact de la neige ou de la glace fondue, ce qui permet d'une part la création à la surface de la bande de roulement de pneumatique de porosités susceptibles d'améliorer « l'accrochage» de la bande de roulement sur le sol et d'autre part la création de gorges jouant le rôle de canaux d'évacuation du film liquide créé entre le pneumatique et le sol.

Ainsi la publication JP-3-159803 décrit des bandes de roulement de pneumatiques dont la composition caoutchouteuse comprend de 3 à 25 pce (pce signifiant parties en poids pour 100 parties d'élastomères), de poudre de polysaccharide tel que la carboxyméthylcellulose de sodium ou de poudre d'alcool vinylique avec une taille de particules comprise entre 20 et 600 µm et ayant une solubilité à 0°C d'au moins 5 g pour 100 ml d'eau, solubilité obtenue en quelques dizaines de secondes de mélangeage.

De la même façon, la publication EP 0 940 435 décrit une composition caoutchouteuse pour bande de roulement comprenant de 1 à 25 pce d'alcool polyvinylique modifié avec une taille de particules comprise entre 10 et 100 µm et une solubilité à 0°C de 1g pour 200 ml d'eau pour un temps de mélangeage très court, c'est-à-dire de l'ordre de la minute.

Enfin la publication JP200211203 décrit une composition caoutchouteuse pour bande de roulement comprenant de 3 à 40 pce de poudre d'amidon dont les particules ont une taille supérieure ou égale à 20 µm et une solubilité de 1 g dans 100 ml d'eau à 10°C atteinte au bout de 3 minutes de mélangeage.

Dans tous ces exemples, il est clair que la solubilité à très basse température et dans un temps très court de la poudre utilisée dans la composition caoutchouteuse est un facteur essentiel au bon fonctionnement de la bande de roulement réalisée. En effet, il est précisé, dans les documents précités, que si la poudre n'est pas soluble dans les conditions d'utilisation du pneumatique, il ne se forme plus de couche adhérente à la surface de la bande de roulement et que, par conséquent, la résistance au glissement est pénalisée. Malheureusement cette bonne performance en adhérence s'accompagne de très mauvais résultats en terme de résistance à l'usure, contrôlable par la dégradation des propriétés de caoutchouterie telles que la rigidité, les propriétés d'allongement et de contrainte à la rupture et les pertes hystérétiques, qui rendent ces solutions inutilisables industriellement.

La demanderesse a découvert de façon surprenante que l'introduction dans la composition caoutchouteuse constitutive de la bande de roulement d'une poudre polysaccharide particulière non soluble dans l'eau dans un temps très court (de l'ordre de la minute) et à très basse température (de l'ordre de 0°) permettait néanmoins d'améliorer le comportement des pneumatiques en terme de résistance au glissement et d'adhérence sur sol enneigé ou gelé sans que la légère chute de résistance à l'usure accompagnant cette modification ne soit rédhibitoire à l'utilisation industrielle de tels pneumatiques.

Dans ce qui suit on désignera par bande de roulement de pneumatique, la bande de roulement toute entière ou une partie de cette dernière, notamment lorsqu'elle est composée de plusieurs couches, au contact du sol.

L'invention concerne ainsi une bande de roulement de pneumatique ayant une composition de caoutchouc à base d'au moins un élastomère diénique, une charge renforçante, un système de vulcanisation caractérisée en ce que la composition comporte une poudre de gomme de guar dans une proportion de 10 à 40 pce, de préférence de 15 à 30 pce.

Plus particulièrement, la taille des particules de poudre de gomme de guar est comprise entre 10 et 500 µm et de préférence de comprise entre 40 et 300 µm.

Selon un mode de réalisation de l'invention, l'élastomère diénique est majoritairement, pour plus de 50 pce, un élastomère isoprénique.

Avantageusement, la charge renforçante comprend majoritairement du noir de carbone.

Selon un autre mode de réalisation, la charge renforçante comprend majoritairement de la silice ou comprend un coupage de noir de carbone et de silice.

L'invention a également pour objet, un procédé d'obtention d'une composition caoutchouteuse pour bande de roulement à base d'au moins un élastomère diénique, une charge renforçante, un système de vulcanisation, qui comprend une première phase de malaxage thermomécanique des constituants de la composition à l'exception du système de vulcanisation, caractérisé en ce que la composition comporte une poudre de gomme de guar dans une proportion de 10 à 40 pce, de préférence de 15 à 30 pce, et en ce que la poudre de gomme de guar est incorporée pendant la première phase de malaxage.

Préférentiellement, la première phase de malaxage est conduite en deux étapes:
- une première étape de malaxage de l'ensemble des constituants de la composition à l'exception de la poudre de gomme de guar et une deuxième étape dans laquelle la poudre de gomme de guar est incorporée.

Avantageusement, la première étape de la première phase de malaxage est réalisée à une température comprise entre 110°C et 190°C, et de préférence entre 130°C et 180°C ; la deuxième étape de la première phase est réalisée à une température inférieure ou égale à 130°C et après un refroidissement à l'issue de la première étape à une température de préférence inférieure à 100°C.

La deuxième phase du procédé est réalisée de préférence à une température comprise entre 60°C et 100°C.

L'invention a encore pour objet un pneumatique comportant une bande de roulement dont la composition caoutchouteuse est à base d'au moins un élastomère diénique, une charge renforçante, un système de vulcanisation caractérisée en ce que la composition comporte une poudre de gomme de guar dans une proportion de 10 à 40 pce, et particulièrement un pneumatique hiver comportant une telle bande de roulement.

L'invention a encore pour objet un pneumatique destiné à équiper un véhicule dit « poids lourd » (c'est-à-dire métro, bus, engins de transport routier (camions, tracteurs, remorques), véhicules hors-la-route), avions, engins de génie civil, agraire, ou de manutention, comportant une bande de roulement conforme à l'invention.

L'homme du métier désigne usuellement par «gommes polysaccharides» tous polysaccharides ou leurs dérivés qui dispersés dans l'eau produisent des gels, hautement visqueux ou des solutions.

La gomme de guar fait partie des gommes polysaccharides, il s'agit de fibres alimentaires « considérées» comme des épaississants et gélifiants, qui ne sont pas solubles dans l'eau et forment un gel à son contact.

Les compositions de caoutchouc selon l'invention sont à base des constituants suivants: au moins un élastomère diénique, une charge renforçante et un système de réticulation.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique essentiellement insaturé susceptible d'être mis en oeuvre dans les compositions conformes à l'invention:
- tout homopolymère obtenu par polymérisation d'un monomère diène conjugué ayant de 4 à 12 atomes de carbone ;
- tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1 ,3, le 2-méthyl-1 ,3- butadiène, les 2,3-di(alkyle en C1 à C5)-1,3 -butadiènes tels que par exemple le 2,3diméthyl-1,3-butadiène, le 2,3-diéthyl-1,3-butadiène, le 2-méthyl-3-éthyl-1,3butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis -1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de - 40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

De manière particulièrement préférentielle, l'élastomère diénique de la composition conforme à l'invention est choisi dans le groupe des élastomères diéniques fortement insaturés constitué par les polybutadiènes (BR), les polyisoprènes (IR) ou du caoutchouc naturel (NR), les copolymères de butadiène-styrène (SBR), les copolymères de butadiène-isoprène (BIR), les copolymères d'isoprène-styrène (SIR), les copolymères de butadiène-acrylonitrile (NBR), les copolymères d'isoprène-styrène (SIR), les copolymères de butadiène-styrène-isoprène (SBIR), les copolymères de butadiène-styrène-acrylonitrile (NSBR) ou un mélange de deux ou plus de ces composés.

Selon un autre mode de réalisation préférentiel, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels).

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Néanmoins de tels polymères diéniques peuvent être utilisés seuls ou en coupage avec d'autres élastomères conventionnellement utilisés dans les pneumatiques tels que des élastomères diéniques essentiellement saturés tels que:
- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène -1,4, l'éthylidène norbornène, le dicyclopentadiène;
- un copolymère d'isobutène et d'isoprène (caoutchouc butyle ou IIR), ainsi que les versions halogénées, en particulier chlorées ou bromées (BIIR), de ce type de copolymère,
- ou un copolymère d'isobutène et de paraméthylstyrène, ainsi que les versions halogénées, en particulier chlorées ou bromées (BIMS), de ce type de copolymère.

A titre de charge renforçante, on peut notamment utiliser du noir de carbone ou de la silice ou d'autres charges renforçantes seule ou en coupage les unes avec les autres.

Plus particulièrement, comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N330, N339, N347, N375.

Dans le cas d'une silice, on utilise de préférence une silice précipitée hautement dispersible, en particulier lorsque l'invention est mise en oeuvre pour la fabrication de pneumatiques présentant une faible résistance au roulement ; comme exemples non limitatifs de telles silices hautement dispersibles préférentielles, on peut citer les silices Ultrasil 7000 et Ultrasil 7005 de la société Degussa, les silices Zeosil 1165MP, 1135MP et Il 15MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

Le système de vulcanisation proprement dit est préférentiellement à base de soufre et d'un accélérateur primaire de vulcanisation, en particulier d'un accélérateur du type sulfénamide. A ce système de vulcanisation de base viennent s'ajouter, divers accélérateurs secondaires ou activateurs de vulcanisation connus tels que oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Bien entendu, les compositions conformes à l'invention peuvent être utilisées seules ou en coupage (i.e., en mélange) avec toute autre composition de caoutchouc utilisable pour la fabrication de pneumatiques. Les compositions de caoutchouc conformes à l'invention peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269 (ou US2003-0212185).

Les exemples qui suivent illustrent l'invention sans toutefois la limiter.

Dans les exemples, les compositions de caoutchouc sont caractérisées après cuisson comme indiqué ci-après.
- Contraintes et allongements à la rupture:
   Les contraintes à la rupture (en MPa) et les allongements à la rupture (en %) sont mesurées à 60°C.
- Propriétés dynamiques
   Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 2 mm d'épaisseur et de 78,5 mm² de section), soumis à une sollicitation sinusoïdale en cisaillement simple alterné, à la fréquence de 10Hz, dans les conditions normales de température selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte, tan(δ). Pour le cycle retour, on indique la valeur maximale de tan(δ) observée (tan(δ)max).

Dans les exemples qui suivent les compositions caoutchouteuses ont été réalisées comme suit.

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale (notée Tmax) comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301 précitées.

Dans le procédé conforme à l'invention, la première phase (non-productive) est conduite préférentiellement en deux étapes thermomécaniques. Au cours de la première étape on introduit, dans un mélangeur approprié tel qu'un mélangeur interne usuel, tous les constituants de base nécessaires, les éventuels agents de recouvrement ou de mise en oeuvre complémentaires et autres additifs divers, à l'exception du système de vulcanisation. Cette première étape est réalisée à une température comprise entre 110°C et 190°C et, de préférence, entre 130°C et 180°C. Une deuxième étape de travail thermomécanique est réalisée dans ce mélangeur interne, après refroidissement intermédiaire (température de refroidissement de préférence inférieure à 100°C), pour introduire les poudres polysaccharides et également dans le but de faire subir aux compositions un traitement thermique complémentaire, et notamment pour améliorer encore la dispersion, dans la matrice élastomérique, de la charge renforçante. La durée totale du malaxage, dans cette phase non-productive, est de préférence comprise entre 2 et 10 minutes à une température inférieure ou égale à 130°C afin d'éviter toute dégradation de la gomme polysaccharide.

La demanderesse a effectivement constaté de façon surprenante, que l'introduction de la gomme polysaccharide dans cette deuxième étape permettait d'améliorer la résistance à la rupture de la composition caoutchouteuse obtenue par rapport à son introduction simultanément aux autres constituants comme le montreront les exemples qui suivent.

Après refroidissement du mélange ainsi obtenu, on incorpore alors le système de vulcanisation à basse température, généralement dans un mélangeur externe tel qu'un mélangeur à cylindres; le tout est alors mélangé (phase productive) pendant quelques minutes, par exemple entre 5 et 15 minutes.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement.

La vulcanisation (ou cuisson) est conduite de manière connue à une température généralement comprise entre 130°C et 200°C, sous pression, pendant un temps suffisant qui peut varier par exemple entre 5 et 90 minutes en fonction notamment de la température de cuisson, du système de vulcanisation adopté, de la cinétique de vulcanisation de la composition considérée ou encore de la taille du pneumatique.

### Exemple 1

Cet exemple a pour objet de comparer les différentes propriétés de caoutchouterie d'une composition témoin pour bande de roulement n'incluant pas de poudre polysaccharide ou hydrosoluble à des compositions pour bande de roulement conformes à l'invention, c'est-à-dire comprenant une poudre de gomme de guar. Cet exemple a également pour but de mettre en évidence l'influence du procédé de fabrication de compositions caoutchouteuses conformes à l'invention sur les propriétés de caoutchouterie.

On nommera A1 et A2 les compositions ayant une même formule de base A. Cette formulation de base A est la suivante :

| | |
|---|---|
| NR (1) | 80 |
| BR (2) | 20 |
| Noir de carbone N234 | 53 |
| Paraffine | 1 |
| Antioxydant (3) | 3 |
| Acide stéarique | 2 |
| ZnO | 3 |
| Soufre | 1,1 |
| Accélérateurs (4) | 1,1 |

| | |
|---|---|
| (1) NR : caoutchouc naturel (peptisé) (2) BR : polybutadiène avec 4,3% del-2 ; 2,7% de trans ; 93% de cis 1-4 (Tg= -106°C) (3) N-1,3 diméthylbutyl N-phénylparaphénylènediamine (6-PPD) (4) N-cyclohexyl-2-benzothiazylsulfénamide (CBS) | |

Les caractéristiques particulières des compositions A1 et A2 sont portées sur le tableau 1 qui suit.

**Tableau 1**

| **Composition N°** | **A1** | **A2** |
|---|---|---|
| Gomme de guar (5) | - | 20 |

| | | |
|---|---|---|
| (5) Gomme de guar :EMMULCOLL 200 SP, DEGUSSA (taille des particules : 72 µm) | | |

La composition A1 est fabriquée avec une introduction de l'ensemble des constituants sur un mélangeur interne. Les agents de vulcanisation (soufre et accélérateur) sont introduits sur un mélangeur externe à basse température (les cylindres constitutifs du mélangeur étant à environ 30°C).

La composition A2 est fabriquée conformément au procédé de l'invention, avec introduction lors d'une première étape de la première phase de mélangeage des constituants sur un mélangeur interne à l'exception de la gomme de guar, ladite gomme de guar étant introduite lors d'une deuxième étape de cette première phase sur le mélangeur interne avec une température n'excédant pas 130°C afin de ne pas dégrader la poudre polysaccharide. Le système de vulcanisation est ensuite introduit sur un mélangeur externe, lors de la deuxième phase du procédé.

Le tableau 2 donne les propriétés mesurées après cuisson à 150°C pendant 25 mn.

**Tableau 2**

| **Composition N°** | **A1** | **A2** |
|---|---|---|
| Allongement à la rupture (%) | 633,3 | 522,7 |
| Contrainte à la rupture (MPa) | 23,17 | 17,19 |
| G* | 1,55 | 1,79 |
| Tan (δ)max | 0,183 | 0,193 |

On constate pour la composition A2 comprenant de la poudre de gomme de guar, un abaissement de l'énergie à la rupture (qui est un produit de la contrainte à la rupture et de l'allongement à la rupture) qui reste cependant dans des valeurs acceptables et qui est en partie compensé par une forte amélioration de la rigidité de A2 (valeur de G*). L'augmentation attendue de l'hystérèse de la composition A2 reste également acceptable.

Ainsi la composition A2 obtenue par ajout de la gomme de guar est tout à fait acceptable du point de vue de ses propriétés de caoutchouterie puisque même pour les propriétés où l'on constate une dégradation, celle-ci n'est pas rédhibitoire pour l'homme du métier.

### Exemple 2

Cet exemple a pour but de montrer la supériorité d'une bande de roulement conforme à l'invention par rapport à une bande de roulement témoin dans une situation de démarrage sur glace d'un pneumatique, avec une température comprise entre -5°C et 0°C. Les bandes de roulement ont été fabriquées à partir des compositions caoutchouteuses de l'exemple 1, conformément au procédé détaillé dans la description. La bande de roulement témoin est ainsi réalisée à partir de la composition témoin A1 de l'exemple 1 et la bande de roulement conforme à l'invention à partir de la composition A2 conforme à l'invention, c'est-à-dire comprenant une poudre de gomme de guar dans des proportions et pour une taille de particules correspondant à l'invention.

Les essais ont été réalisées pour un pneumatique de dimensions 11R22.5XDW « ICE GRIP » monté sur une roue 7.5*22,5 d'un camion « SCANIA SV81 » pour les tests de démarrage et d'un camion « SV79 TDH » pour les tests de freinage.

Les mesures ont été effectuées de la façon suivante:
- pour le démarrage: on mesure la distance parcourue pendant les deux premières secondes suivant le démarrage, le démarrage étant effectué avec un régime moteur constant imposé distance et l'application brutal d'un couple moteur et maintien de ce couple.

Les mesures sont réalisées pour le véhicule à vide et pour le véhicule en charge, c'est-à-dire, avec une charge nominale.
- pour le freinage: distance d'arrêt du camion à partir d'une vitesse stabilisée de 30 km/h avec un freinage ABS.

Les résultats obtenus sont portés dans le tableau 3 qui suit, en unités relatives, la valeur 100 étant retenue pour la composition témoin A1. Une valeur supérieure à 100 indique un résultat amélioré.

**Tableau 3**

| **Pneumatique avec bande de roulement avec composition N°** | **A1** | **A2** |
|---|---|---|
| Démarrage Glace entre -5°C et 0°C à vide | 100 | 109 |
| Démarrage Glace entre-5°C et 0°C en charge | 100 | 115 |
| Démarrage neige à vide | 100 | 110 |

Il apparaît clairement que le pneumatique correspondant à la composition de bande de roulement A2, conforme à l'invention, permet d'améliorer significativement l'adhérence du pneumatique sur sol gelé.

### Exemple 3

Cet exemple a pour objet de comparer les propriétés de rigidité, propriétés de contrainte et d'allongement à la rupture, etc. de plusieurs compositions caoutchouteuses conformes à l'invention avec celles d'une composition pour bande de roulement conforme à l'état de la technique précité c'est à dire comprenant une poudre hydrosoluble telle que la carboxyméthylcellulose ou l'alcool polyvinylique, PVA.
Les compositions ont été réalisées selon le mode opératoire décrit dans l'exemple 1 pour A2, A2 étant identique à la composition du même nom de l'exemple 1.

Toutes les compositions notées A2, B2, C2, E(PVA) et F(CARBO) ont la formulation de base A précisée dans l'exemple 1, elles se distinguent les unes des autres par leur teneur en poudre de gomme de guar ou poudre hydrolsoluble comme suit :
- A2 : contient 20 pce de gomme de guar EMMULCOLL 200 SP, DEGUSSA (taille des particules : 72 µm),
- B2 : 20 pce de gomme de guar échantillon L YGOMME-3 fourni par DEGUSSA, viscosité en solution aqueuse de 1000 cp (centipoise), (taille des particules : 50 µm),
- E(PVA) : 20 pce de PV A commercialisé sous le nom MOWIOL 4-88 par la société ALRICH, PVA 86.7-88.7 mol% hydrolysé, degré de polymérisation 630, viscosité à 4% dans H20 à 20°C 3-5mPa.s, (taille des particules : 500 µm)
- F(CARBO): 20 pce de carboxyméthylcellulose, sel de sodium, provenant de la société FLUKA (N°21903), caractérisée par une viscosité en solution de 700-1500 mPa.s (à 1 % dans H20, à 25°C) et par un degré de substitution de 0.7-0.85, (taille des particules : 89 µm).

Le tableau 4 donne les propriétés mesurées après cuisson à 150°C pendant 25mn.

**Tableau 4**

| **Composition N°** | **A2** | **B2** | **E(PVA)** | **F(CARBO)** |
|---|---|---|---|---|
| Allongement à la rupture (%) | 522,7 | 490,1 | 339,6 | 404,4 |
| Contrainte à la rupture (MPa) | 17,2 | 17,4 | 9,9 | 13,9 |
| G* | 1,79 | 1,83 | 1,87 | 1,84 |
| Tan (δ)max | 0,193 | 0,195 | 0,214 | 0,212 |

On constate que les compositions A2 et B2 conformes à l'invention présentent un bien meilleur compromis de renforcement mécanique sans une pénalisation importante de l'hystérèse du matériau, que les mélanges comprenant de l'alcool polyvinylique, E(PVA), ou de la carboxyméthylcellulose, F(CARBO).

Cet exemple nous permet donc d'illustrer l'amélioration de propriétés de caoutchouterie des compositions conformes à l'invention par rapport aux compositions décrites dans l'art antérieur, et par conséquent l'amélioration de la résistance à l'usure des compositions conformes à l'invention par rapport à ces compositions de l'art antérieur. Or c'est précisément cette dégradation de la résistance à l'usure pour les compositions de l'art antérieur qui les rendait, comme on l'a dit au début de la description, inutilisables industriellement.

## Revendications

1. Bande de roulement de pneumatique ayant une composition de caoutchouc pour bande de roulement de pneumatique à base d'au moins un élastomère diénique, une charge renforçante, un système de vulcanisation **caractérisée en ce que** la composition comporte une poudre de gomme de guar dans une proportion de 10 à 40 parties en poids pour cent parties d'élastomère, pce.

2. Bande de roulement selon la revendication 1, dans laquelle la proportion de poudre de gomme de guar comprise dans la composition est de 15 à 30 pce.

3. Bande de roulement selon l'une quelconque des revendications 1 ou 2, dans laquelle la taille des particules constitutives de la poudre de gomme de guar est comprise entre 10 et 500 µm.

4. Bande de roulement selon l'une quelconque des revendications précédentes, dans laquelle l'élastomère diénique est majoritairement, pour plus de 50 pce, un élastomère isoprénique.

5. Bande de roulement selon l'une quelconque des revendications précédentes, dans laquelle la charge renforçante comprend majoritairement du noir de carbone ou de la silice.

6. Bande de roulement selon l'une quelconque des revendications précédentes, dans laquelle la charge renforçante comprend un coupage de noir de carbone et de silice.

7. Procédé d'obtention d'une composition caoutchouteuse pour bande de roulement à base d'au moins un élastomère diénique, une charge renforçante, un système de vulcanisation, qui comprend une première phase de malaxage thermomécanique des constituants de la composition à l'exception du système de vulcanisation **caractérisée en ce que** la composition comporte une poudre de gomme de guar dans une proportion de 10 à 40 pce et **en ce que** la poudre de gomme de guar est incorporée pendant la première phase de malaxage.

8. Procédé selon la revendication 7, dans lequel la proportion de poudre de guar dans la composition est comprise entre 15 et 30 pce.

9. Procédé selon l'une quelconque des revendications 7 ou 8, dans lequel la première phase de malaxage est conduite en deux étapes: - une première étape de malaxage de l'ensemble des constituants de la composition à l'exception de la poudre de gomme de guar et une deuxième étape dans laquelle la poudre de gomme de guar est incorporée.

10. Procédé selon la revendication 9, dans lequel la première étape de la première phase de malaxage est réalisée à une température comprise entre 110°C et 190°C.

11. Procédé selon la revendication 10, dans lequel la deuxième étape de la première phase de malaxage est réalisée à une température inférieure ou égale à 130°C, après un refroidissement à l'issue de la première étape.

12. Procédé selon l'une quelconque des revendications 7 à 11, dans lequel la deuxième phase est réalisée à une température comprise entre 60°C et 100°C.

13. Pneumatique comportant une bande de roulement selon l'une quelconque des revendications 1 à 6.

14. Pneumatique hiver comportant une bande de roulement selon l'une quelconque des revendications 1 à 6.

15. Pneumatique destiné à équiper des véhicules poids lourd, comportant une bande de roulement selon l'une quelconque des revendications 1 à 6.

## Claims

1. Tyre tread having a tyre tread rubber composition based on at least one diene elastomer, one reinforcing filler and one vulcanization system, **characterized in that** the composition comprises a guar gum powder in a proportion of 10 to 40 parts by weight per hundred parts of elastomer, pce.

2. Tread according to Claim 1, in which the proportion of guar gum powder included in the composition is from 15 to 30 pce.

3. Tread according to either one of Claims 1 and 2, in which the size of the constituent particles of the guar gum powder is between 10 and 500 µm.

4. Tread according to any one of the preceding claims, in which the diene elastomer is predominantly, for more than 50 pce, an isoprene elastomer.

5. Tread according to any one of the preceding claims, in which the reinforcing filler predominantly comprises carbon black or silica.

6. Tread according to any one of the preceding claims, in which the reinforcing filler comprises a blend of carbon black and silica.

7. Process for obtaining a rubber composition for a tread based on at least one diene elastomer, one reinforcing filler and one vulcanization system which comprises a first phase of thermomechanical kneading of the constituents of the composition, with the exception of the vulcanization system, **characterized in that** the composition comprises a guar gum powder in a proportion of 10 to 40 pce and **in that** the guar gum powder is incorporated during the first kneading phase.

8. Process according to Claim 7, in which the proportion of guar powder in the composition is between 15 and 30 pce.

9. Process according to either one of Claims 7 or 8, in which the first kneading phase is carried out in two stages: a first stage of kneading the combined constituents of the composition, with the exception of the guar gum powder, and a second stage in which the guar gum powder is incorporated.

10. Process according to Claim 9, in which the first stage of the first kneading phase is carried out at a temperature of between 110°C and 190°C.

11. Process according to Claim 10, in which the second stage of the first kneading phase is carried out at a temperature of less than or equal to 130°C, after cooling on conclusion of the first stage.

12. Process according to any one of Claims 7 to 11, in which the second phase is carried out at a temperature of between 60°C and 100°C.

13. Tyre comprising a tread according to any one of Claims 1 to 6.

14. Winter tyre comprising a tread according to any one of Claims 1 to 6.

15. Tyre intended to equip heavy-duty vehicles comprising a tread according to any one of Claims 1 to 6.

## Patentansprüche

1. Lauffläche eines Reifens, der eine Gummizusammensetzung für die Lauffläche eines Reifens, die mindestens aus einem Dienelastomer, einem verstärkenden Füllstoff, einem Vulkanisationssystem besteht, aufweist, **dadurch gekennzeichnet, dass** die Zusammensetzung Guargummipulver in einem Verhältnis von 10 bis 40 Gewichtsanteilen auf einhundert Anteile Elastomer umfasst.

2. Lauffläche nach Anspruch 1, wobei der Anteil des in der Zusammensetzung enthaltenen Guargummipulvers 15 bis 30 Gewichtsanteile auf einhundert Anteile Elastomer beträgt.

3. Lauffläche nach einem der Ansprüche 1 oder 2, wobei die Größe der das Guargummipulver bildenden Partikel zwischen 10 und 500µm beträgt.

4. Lauffläche nach einem der vorhergehenden Ansprüche, wobei das Dienelastomer maßgeblich, zu mehr als 50 Gewichtsanteilen auf einhundert Anteile Elastomer, ein Isopren-Elastomer ist.

5. Lauffläche nach einem der vorhergehenden Ansprüche, wobei der verstärkendenFüllstoff maßgeblich Ruß oder Kieselsaüre aufweist.

6. Lauffläche nach einem der vorhergehenden Ansprüche, wobei der aktive Füllstoff einen Verschnitt aus Ruß und aus Kieselsaüre aufweist.

7. Verfahren zum Erhalt einer kautschukartigen Zusammensetzung für eine Lauffläche, die mindestens aus einem Dienelastomer, einem verstärkendenFüllstoff, einem Vulkanisationssystem besteht, das eine erste Phase des thermomechanischen Rührens der Bestandteile der Zusammensetzung mit Ausnahme des Vulkanisationssystems aufweist, **dadurch gekennzeichnet, dass** die Zusammensetzung Guargummipulver in einem Verhältnis von 10 bis 40 Gewichtsanteilen auf einhundert Anteile Elastomer umfasst und dass das Guargummipulver während der ersten Rührphase aufgenommen wird.

8. Verfahren nach Anspruch 7, wobei der Anteil des Guarpulvers in der Zusammensetzung zwischen 15 und 30 Gewichtsanteile auf einhundert Anteile Elastomer beträgt.

9. Verfahren nach einem der Ansprüche 7 oder 8, wobei die erste Rührphase in zwei Schritten erfolgt: - einem ersten Schritt des Rührens sämtlicher Bestandteile der Zusammensetzung mit Ausnahme des Guargummipulvers und einem zweiten Schritt, in dem das Guargummipulver aufgenommen wird.

10. Verfahren nach Anspruch 9, wobei der erste Schritt der ersten Rührphase bei einer Temperatur zwischen 110°C und 190°C erfolgt.

11. Verfahren nach Anspruch 10, wobei der zweite Schritt der ersten Rührphase nach einer Abkühlung nach dem ersten Schritt bei einer Temperatur von höchstens 130°C erfolgt.

12. Verfahren nach einem der Ansprüche 7 bis 11, wobei die zweite Phase bei einer Temperatur zwischen 60°C und 100°C erfolgt.

13. Reifen, umfassend eine Lauffläche nach einem der Ansprüche 1 bis 6.

14. Winterreifen, umfassend eine Lauffläche nach einem der Ansprüche 1 bis 6.

15. Reifen für Lastkraftwagen, umfassend eine Lauffläche nach einem der Ansprüche 1 bis 6.
